# EUROPEAN PATENT APPLICATION

(11) **EP 4 509 350 A1**
(43) Date of publication of application: **19.02.2025**
(21) Application number: 23794863.3
(22) Date of filing: 21.03.2023
(51) Int. Cl.: B60L 53/60

(54) **BATTERY CHARGING CONTROL METHOD AND APPARATUS, DEVICES, AND STORAGE MEDIUM**

(30) Priority: 24.04.2022 CN 202210435627
(71) Applicant: Contemporary Amperex Technology Co., Limited, Ningde, Fujian 352100 (CN)
(72) Inventor: LI, Zhanliang, Ningde, Fujian 352100 (CN); ZHAO, Yuanmiao, Ningde, Fujian 352100 (CN); DAN, Zhimin, Ningde, Fujian 352100 (CN); YAN, Yu, Ningde, Fujian 352100 (CN); CHEN, Xinwei, Ningde, Fujian 352100 (CN)
(74) Representative: Gong, Jinping
(86) International application number: PCT/CN2023/082732
(87) International publication number: WO 2023/207428

(57) **Abstract**

The present application provides a battery charging control method and apparatus, an electrical device, a charging device, and a storage medium. The battery charging control method includes: acquiring a battery heating state; and sending a first message carrying the battery heating state to a charging device, so that the charging device judges whether to enter a battery charging stage according to the battery heating state; wherein the battery heating state is a heating state or a heating completion state. Compared with the prior art, in the present application, the electrical device can autonomously implement a process of pulse heating followed by DC charging by relying on the interaction with the charging device, thereby avoiding possible damage to a power battery caused by charging in a low-temperature environment and improving the experience of a user.

## Description

The present application claims priority to Chinese patent application No. 202210435627.4 filed with the China National Intellectual Property Administration on April 24, 2022 and entitled "BATTERY CHARGING CONTROL METHOD, APPARATUS, DEVICE, AND STORAGE MEDIUM", the entire content of which is incorporated herein by reference.

### TECHNICAL FIELD

The present application relates to the technical field of batteries, and in particular to a battery charging control method and apparatus, an electronic device, a charging device, and a storage medium.

### BACKGROUND

Intellectualization and electrification are one of the important development directions in the field of intelligent transportation. Especially in the field of electrification, with the advancement of materials and technology, the energy density of battery packs is getting higher and higher, and vehicles are also using various types of battery packs as energy sources. Compared with traditional vehicles that mainly use fossil fuels as energy sources, modem vehicles are increasingly using battery packs represented by lithium-ion power batteries as energy sources.

Most of the existing methods for charging power batteries adopt national standard procedures, but the national standard procedures are not suitable for all scenarios. In some special scenarios, they may instead cause damage to the power batteries. For example, charging in a low-temperature environment may lead to the risk of lithium plating in the batteries.

### SUMMARY OF THE INVENTION

In view of the aforementioned problem, the present application provides a battery charging control method and apparatus, an electrical device, a charging device, and a storage medium, which can avoid possible damage caused by charging a power battery in a low-temperature environment.

In a first aspect, the present application provides a battery charging control method used for an electrical device, including:
acquiring a battery heating state; and
sending a first message carrying the battery heating state to a charging device, so that the charging device judges whether to enter a battery charging stage according to the battery heating state;
wherein the battery heating state is a heating state or a heating completion state.

In the technical solution of the embodiment of the present application, the electrical device and the charging device are connected physically, and various pre-charging preparation stages need to be completed before the charging device outputs power. After the low-temperature pulse heating stage of the power battery, the electrical device acquires a battery heating state and sends a first message carrying the battery heating state to the charging device. The charging device judges whether to enter the battery charging stage, i.e., whether to output power, according to the battery heating state. The electrical device can autonomously implement a process of pulse heating followed by direct current (DC) charging by relying on the interaction with the charging device, thereby avoiding possible damage to the power battery caused by charging in a low-temperature environment. A user does not need to wait for the battery to complete self-heating before connecting the charging device for charging, thereby improving the experience of the user.

In some embodiments, before the acquiring a battery heating state, the method further includes:
acquiring a current temperature of the battery;
determining that the battery is in the heating state when the current temperature of the battery is less than a preset temperature; and
determining that the battery is in the heating completion state when the current temperature of the battery is greater than or equal to the preset temperature.

In an embodiment of the present application, before acquiring the battery heating state, the electrical device can judge whether the battery heating state is a heating state or a heating completion state according to the current temperature of the power battery, so that the electrical device can quickly acquire the battery heating state, thereby improving the efficiency of the electrical device in completing subsequent processes.

In some embodiments, the method further includes:
continuing to acquire the current temperature of the battery by the electrical device after entering the battery charging stage; and
sending a charging stop instruction to the charging device when the current temperature of the battery is less than the preset temperature.

In an embodiment of the present application, when the electrical device is being charged, the ambient temperature may continue to change, and thus the battery temperature also changes accordingly, which may cause that the electrical device is still charging when the battery temperature decreases. It may cause damage to the battery. In the present embodiment, after entering the battery charging stage, the electrical device continues to acquire the temperature of the battery. When the temperature of the battery is lower than a preset temperature required for charging, a charging stop instruction is sent to the charging device to stop charging of the battery, thereby avoiding damage to the battery. Afterwards, the low-temperature pulse heating stage can be started again to heat the battery.

In some embodiments, after entering the battery charging stage, the electrical device continues to acquire the current temperature of the battery, including: continuing to acquire the current temperature of the battery by the electrical device after entering the battery charging stage and a preset time has passed.

In this embodiment, when the battery of the electrical device is charged by the charging device, the temperature of the battery will rise as the charging progresses within the preset time, but after the preset time, there is a situation in which the electrical device is still being charged when the temperature of the battery decreases, which may cause damage to the battery. In this embodiment, after the preset time, the charging device judges whether to continue the charging of the battery according to the battery heating state, thereby achieving precise control of the battery charging.

In some embodiments, the sending a first message carrying the battery heating state to a charging device includes: sending the first message carrying the battery heating state to the charging device according to a first preset period.

In this embodiment, the electrical device periodically acquires the battery heating state, and sends the first message carrying the battery heating state to the charging device, so that the charging device can periodically acquire the battery heating state, thereby achieving precise control of battery charging.

In some embodiments, the method further includes: receiving a second message sent by the charging device, the second message carrying a state of the charging device.

In this embodiment, after receiving the second message sent by the charging device, the electrical device can acquire the state of the charging device from the second message, so that normal communication is maintained between the electrical device and the charging device, thereby avoiding inconvenience caused to the user by interruption of the charging procedure.

In some embodiments, the method further includes: adding a corresponding sending time tag to the first message and then storing the first message added with the corresponding sending time tag.

In this embodiment, the electrical device adds a corresponding sending time tag to the first message sent to the charging device and stores the first message added with the corresponding sending time tag for the user to view, thereby improving the experience of the user.

In a second aspect, the present application provides a battery charging control method used for a charging device, including:
receiving a first message sent by an electrical device, the first message carrying a battery heating state; and
judging whether to enter a battery charging stage according to the battery heating state;
wherein the battery heating state is a heating state or a heating completion state.

In the technical solution of the embodiment of the present application, the electrical device and the charging device are connected physically, and various pre-charging preparation stages need to be completed before the charging device outputs power. In the low-temperature pulse heating stage of the power battery, the electrical device acquires a battery heating state and sends a first message carrying the battery heating state to the charging device. The charging device judges whether to enter the battery charging stage, i.e., whether to output power, according to the battery heating state. The charging device can autonomously implement a process of pulse heating followed by direct current (DC) charging by relying on the interaction with the electrical device, thereby avoiding possible damage to the power battery caused by charging in a low-temperature environment, thereby improving the experience of the user.

In some embodiments, the judging whether to enter a battery charging stage according to the battery heating state includes:
not allowing the charging device to enter the battery charging stage when the battery heating state is the heating state; and
allowing the charging device to enter the battery charging stage when the battery heating state is the heating completion state.

In this embodiment, when the battery is being heated, the charging device does not enter the battery charging stage, that is, the charging device does not output power, which can avoid possible damage to the power battery caused by charging in a low-temperature environment.

In some embodiments, the method further includes: sending a second message to the electrical device when the battery heating state is the heating state, the second message carrying a state of the charging device.

In this embodiment, when the battery is in the heating state, the charging device cannot charge the battery. In order to maintain the normal communication with the electrical device, the charging device sends the second message to the electrical device, so that the electrical device can know the current state of the charging device, thereby avoiding inconvenience to the user caused by interruption of the charging procedure.

In some embodiments, the sending a second message to the electrical device when the battery heating state is the heating state includes: sending the second message to the electrical device according to a second preset period when the battery heating state is the heating state.

In this embodiment, the second message is sent periodically, so that the electrical device can regularly learn the current state of the charging device, thereby achieving precise control of battery charging.

In a third aspect, the present application provides a battery charging control apparatus used for an electrical device, including:
an acquiring module for acquiring a battery heating state; and
a first sending module for sending a first message carrying the battery heating state to a charging device, so that the charging device judges whether to enter a battery charging stage according to the battery heating state;
wherein the battery heating state is a heating state or a heating completion state.

In a fourth aspect, the present application provides a battery charging control apparatus used for a charging device, including:
a receiving module for receiving a first message sent by an electrical device, the first message carrying a battery heating state; and
a judging module for judging whether to enter a battery charging stage according to the battery heating state;
wherein the battery heating state is a heating state or a heating completion state.

In a fifth aspect, the present application provides an electrical device, including: a memory, a processor, and a computer program stored on the memory and runnable on the processor, wherein when run by the processor, the computer program is executed to implement the method of the first aspect.

In a sixth aspect, the present application provides a charging device, including: a memory, a processor, and a computer program stored on the memory and runnable on the processor, wherein when run by the processor, the computer program is executed to implement the method of the second aspect.

In a seventh aspect, the present application provides a computer-readable storage medium on which computer-readable instructions are stored, wherein the computer-readable instructions are executable by a processor to implement the method of the first aspect or the second aspect.

The above description is only an overview of the technical solution of the present application. In order to better understand the technical means of the present application and thus implement them according to the contents of the specification, and in order to make the above and other objectives, features and advantages of the present application more obvious and understandable, the following is the detailed description of the present application.

### DESCRIPTION OF DRAWINGS

Various other advantages and benefits will become apparent to those of ordinary skill in the art upon reading the following detailed description of the preferred embodiments. The drawings are for the purpose of illustrating the preferred implementations only and are not to be considered a limitation to the present application. Also, the same components are denoted by the same reference numerals throughout the drawings. In the accompanying drawings:
FIG. 1 is a schematic diagram showing a physical connection between an electrical device and a charging device;
FIG. 2 shows a general overall flow chart when the electrical device is charged by the charging device;
FIG. 3 shows a general overall flow chart when the electrical device is charged by the charging device in a low-temperature environment;
FIG. 4 shows one of the flow charts of a battery charging control method for an electrical device provided by the present application;
FIG. 5 shows the second one of the flow charts of a battery charging control method for an electrical device provided by the present application;
FIG. 6 shows a flow chart of a battery charging control method for a charging device provided by the present application;
FIG. 7 is a schematic diagram showing a flow chart of interaction between the electrical device and the charging device provided by the present application;
FIG. 8 shows a schematic structural view of a battery charging control apparatus for the electrical device provided by the present application;
FIG. 9 shows a schematic structural view of a battery charging control apparatus for the charging device provided by the present application; and
FIG. 10 shows a schematic structural view of a readable storage medium provided by the present application.

### DETAILED DESCRIPTION

Embodiments of the technical solutions of the present application will be described in detail below with reference to the accompanying drawings. The following embodiments are only used to more clearly illustrate the technical solution of the present application, and therefore are only used as examples and cannot be used to limit the scope of protection of the present application.

Unless otherwise defined, all technical and scientific terms used herein have the same meanings as those commonly understood by those skilled in the art to which the present application pertains to. the terms used herein are for the purpose of describing specific embodiments only, and are not intended to limit the present application. The terms "including" and "having" and any variations thereof in the description and claims of the present application and the aforementioned description of the drawings are intended to cover non-exclusive inclusion.

In the description of the embodiments of the present application, the technical terms "first", "second", and the like are used only to distinguish between different objects, and are not to be understood as indicating or implying a relative importance or implicitly specifying the number, particular order, or primary and secondary relation of the technical features indicated. In the description of the embodiments of the present application, the meaning of "a plurality of" is two or more, unless otherwise explicitly and specifically defined.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is simply a description of an association of associated objects, which indicates that there may exist three relationships, for example, A and/or B may mean: the presence of A, the presence of both A and B, and the presence of B. In addition, the character "/" herein generally means that the associated objects before and after it are in an "or" relationship.

In the description of the embodiments of the present application, the term "a plurality of" refers to two or more (including two). Similarly, "multiple groups" refers to two or more groups (including two groups), and "multiple pieces" refers to two or more pieces (including two pieces).

In the description of the embodiments of the present application, the orientation or positional relationships indicated by the technical terms "center", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential", etc. are based on the orientation or positional relationships shown in the accompanying drawings, and are only for convenience of description of the present application and simplification of the description, rather than indicating or implying that the indicated device or element must have a specific orientation, be constructed and operate in a specific orientation, and therefore, cannot be understood as a limitation to the present application.

**In** the description of the embodiments of the present application, unless otherwise specified and limited, the technical terms "mounting", "connection", "connection" and "fixation" should be understood in a broad sense, for example, they can be fixed connection, detachable connection, or integration; or they can be mechanical connection or electrical connection; or they can be direct connection, indirect connection through an intermediate medium, or communication of the interiors of two elements or the relationship of interaction between two elements. For those of ordinary skill in the art, the specific meanings of the above terms in the embodiments of the present application can be understood according to specific situations.

At present, from the perspective of the development of the market situation, power batteries are increasingly more widely used. Power batteries are not only applied in energy storage power source systems such as water, fire, wind and solar power stations, but also widely applied in electric transport tools, such as electric bicycles, electric motorcycles, and electric vehicles, as well as many fields, such as military equipment and aerospace. As the application fields of the power batteries continue to expand, their market demand is also constantly expanding.

The inventors have noticed that in an environment of minus thirty degrees Celsius, the charging performance of battery packs represented by lithium batteries is basically zero, and the discharging performance of them is also very poor. Therefore, studying the low-temperature rapid heating of battery packs is very important for improving the adaptability of the electrical device to the environment. For example, an electric car owner parks his/her car and plugs a charging gun into the car to charge it before leaving. However, at this time the temperature of the battery is too low to charge directly, and direct charging will damage the battery. Based on a current phenomenon in which the low-temperature environment has a great impact on the charging performance of the battery pack, it has become a focus of the present application how to control the battery pack to heat up quickly before charging.

In order to solve the problem of battery damage caused by charging in the low-temperature environment, the applicant has found by research that the existing charging process can be improved to achieve charging in the low-temperature environment without damaging the battery. Specifically, the charging device is controlled to output power to charge the battery of the electrical device after the heating of the battery is completed. For example, after it is determined that the battery is heated to about 0 degrees, then the battery is charged by the charging device.

Based on the aforementioned considerations, in order to solve the problem of battery damage caused by charging in the low-temperature environment, the inventors have designed a battery charging control method after in-depth research. The electrical device and the charging device are physically connected. Various pre-charging preparation stages need to be completed before the charging device outputs power. After the low-temperature pulse heating stage of the power battery, the electrical device acquires the battery heating state and sends a message carrying the battery heating state to the charging device. The charging device judges whether to enter the battery charging stage, i.e., whether to output power, according to the battery heating state. When the battery is being heated, the charging device does not enter the battery charging stage, that is, the charging device does not output power, and sends a message carrying the charging device state to the electrical device, so as to maintain normal communication with the electrical device and avoid interruption of the charging process due to long-term lack of communication between the two.

Through the aforementioned manner, the electrical device can autonomously implement the process of pulse heating followed by DC charging by relying on the interaction with the charging device, thereby avoiding possible damage to a power battery caused by charging in a low-temperature environment. A user does not need to wait for the battery to complete self-heating before connecting the charging device for charging, thereby improving the experience of the user.

The battery charging control method disclosed in the embodiment of the present application can be used in, but is not limited to, electric toys, electric tools, battery cars, electric cars, ships, spacecraft and the like electrical devices. Electric toys can include fixed or mobile electric toys, e.g., game consoles, electric car toys, electric ship toys, and electric airplane toys, etc., and the spacecraft can include airplanes, rockets, space shuttles, and spaceships, etc.

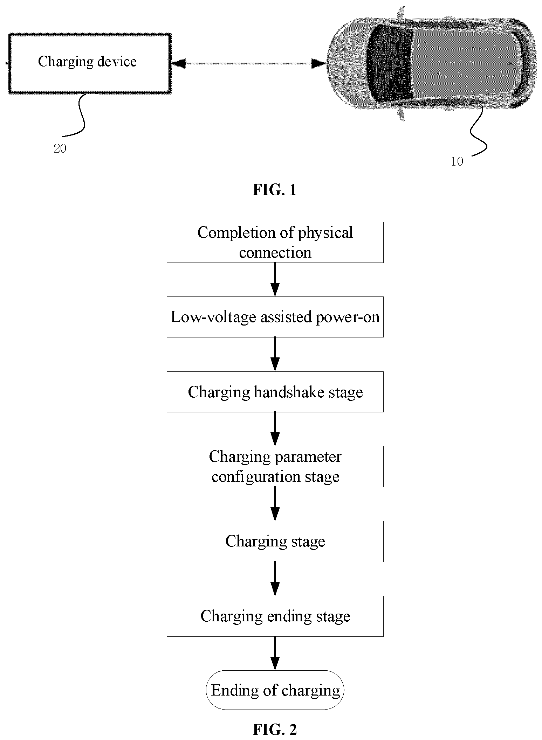

FIG. 1 is a schematic diagram showing a physical connection between an electrical device 10 and a charging device 20. For ease of understanding, in the present application, an electric car is taken as an example of the electrical device 10, and a charging pile is taken as an example of the charging device 20.

FIG. 2 shows a general overall flow chart when the electrical device 10 is charged by the charging device 20. The general charging process includes completion of physical connection, low-voltage assisted power-on, a charging handshake stage, a charging parameter configuration stage, a charging stage, and a charging ending stage. A battery management system (BMS) on the electrical device 10 is a main body for controlling charging parameters, and the charging device 20 is a main body for executing the control.

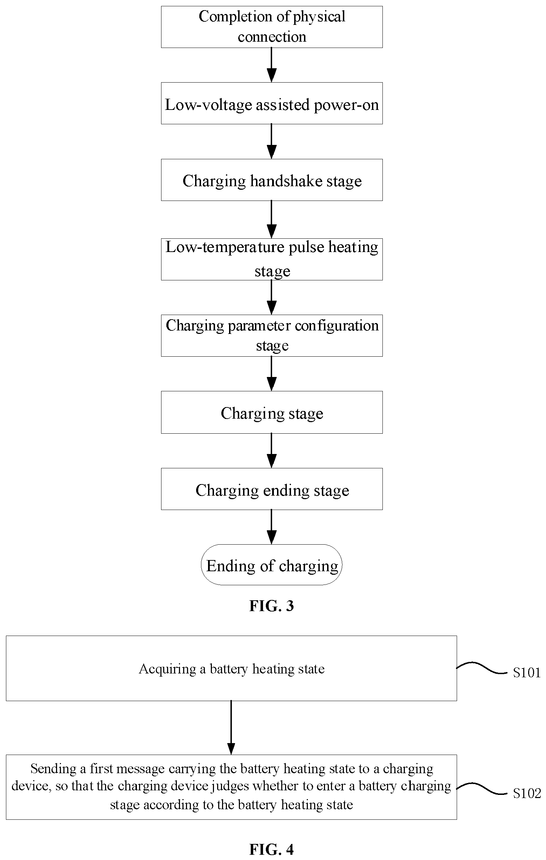

FIG. 3 shows a general overall flow chart when the electrical device 10 is charged by the charging device 20 in a low-temperature environment. Compared with the charging process shown in FIG. 2, a low-temperature pulse heating stage is added to the charging handshake stage and the charging parameter configuration stage.

In the low-temperature pulse heating stage, the battery management system BMS of the electrical device 10 judges whether the temperature of the battery meets the minimum temperature Tₘᵢₙ required for charging. If so, it enters the charging parameter configuration stage. If not, the battery management system BMS acquires the optimal charge and discharge frequency and a current upper limit of the battery under the current temperature and a state of health (SOH) by looking up a table, and the battery management system BMS sends a first instruction (the first instruction at least including the frequency and amplitude of the positive and negative alternating excitation current) to the charging device 20, and the charging device 20 charges and discharges the battery according to the first instruction to achieve low-temperature alternating excitation heating of the battery pack. During the heating process, the battery management system BMS judges whether the temperature of the battery meets the minimum temperature Tₘᵢₙ required for charging in real time, and adjusts the frequency and amplitude of the excitation current in real time. When the temperature of the battery meets the minimum temperature Tₘᵢₙ required for charging, the battery management system BMS sends a second instruction (the first instruction at least including a outputting stop instruction) to the charging device 20, and the charging device 20 stops outputting the positive and negative alternating excitation current, i.e., stopping battery heating.

An embodiment of the present application provides a battery charging control method used for the electrical device 10, and a specific main body for executing the control may be the battery management system BMS. The aforementioned method is applied after the low-temperature pulse heating stage and before the charging stage of the charging process shown in FIG. 3.

Referring to the flow chart of the battery charging control method shown in FIG. 4, the method specifically includes the following steps:
S101. acquiring a battery heating state; and
S102. sending a first message carrying the battery heating state to a charging device, so that the charging device judges whether to enter a battery charging stage according to the battery heating state;
   wherein the battery heating state is a heating state or a heating completion state. The heating state indicates that the temperature of the battery has not yet met the minimum temperature Tₘᵢₙ required for charging, and the heating completion state indicates that the temperature of the battery meets the minimum temperature Tₘᵢₙ required for charging.

Specifically, the charging device does not enter the battery charging stage when the battery heating state is the heating state; and the charging device enters the battery charging stage when the battery heating state is the heating completion state.

In this embodiment, referring to FIG. 1, the electrical device 10 and the charging device 20 are connected physically, and various pre-charging preparation stages need to be completed before the charging device 20 outputs power. After the low-temperature pulse heating stage of the power battery, the electrical device 10 acquires a battery heating state and sends a first message carrying the battery heating state to the charging device 20. The charging device 20 judges whether to enter the battery charging stage, i.e., whether to output power, according to the battery heating state. The electrical device 10 can autonomously implement a process of pulse heating followed by direct current (DC) charging by relying on the interaction with the charging device 20, thereby avoiding possible damage to the power battery caused by charging in a low-temperature environment. A user does not need to wait for the battery to complete self-heating before connecting the charging device for charging, thereby improving the experience of the user.

According to some embodiments of the present application, before the battery heating state is acquired in the step S101, the current temperature of the battery can be acquired; when the current temperature of the battery is lower than the preset temperature, it is determined that the battery is in the heating state; and when the current temperature of the battery is greater than or equal to the preset temperature, it is determined that the battery is in the heating completion state. The preset temperature may be a minimum temperature Tₘᵢₙ that meets the charging requirement.

In an embodiment of the present application, before acquiring the battery heating state, the electrical device can judge whether the battery heating state is a heating state or a heating completion state according to the current temperature of the power battery, so that the electrical device can quickly acquire the battery heating state, thereby improving the efficiency of the electrical device in completing subsequent processes.

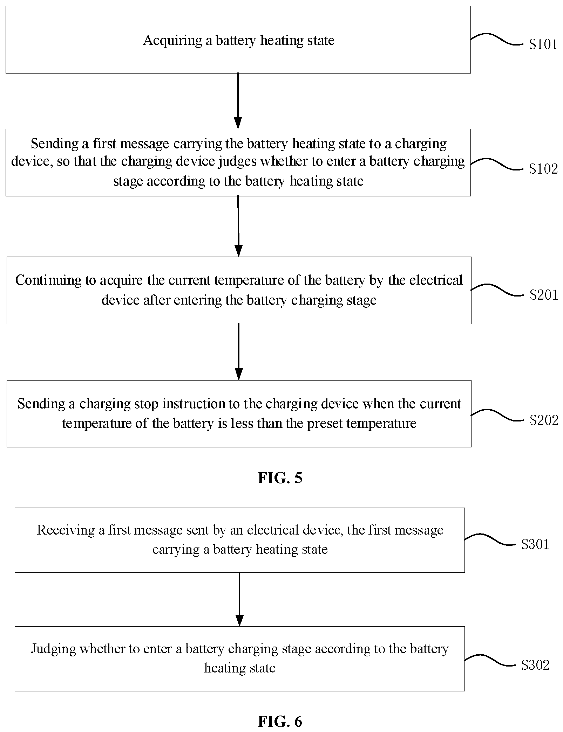

According to some embodiments of the present application, referring to FIG. 5, the aforementioned battery charging control method may further include the following steps:
S201. continuing to acquire the current temperature of the battery by the electrical device after entering the battery charging stage; and
S202. sending a charging stop instruction to the charging device when the current temperature of the battery is less than the preset temperature.

In an embodiment of the present application, when the electrical device is being charged, the ambient temperature may continue to change, and thus the battery temperature also changes accordingly, which may cause that the electrical device is still charging when the battery temperature decreases. It may cause damage to the battery. In the present embodiment, after entering the battery charging stage, the electrical device continues to acquire the temperature of the battery. When the temperature of the battery is lower than a preset temperature required for charging, a charging stop instruction is sent to the charging device to stop charging of the battery, thereby avoiding damage to the battery. Afterwards, the low-temperature pulse heating stage can be started again to heat the battery.

According to some embodiments of the present application, the step S201 may be specifically implemented as: continuing to acquire the current temperature of the battery by the electrical device after entering the battery charging stage and a preset time has passed.

In this embodiment, when the battery of the electrical device is charged by the charging device, the temperature of the battery will rise as the charging progresses within the preset time, but after the preset time (e.g., 1 hour), there is a situation in which the electrical device is still being charged when the temperature of the battery decreases, which may cause damage to the battery. In this embodiment, after the preset time, the charging device judges whether to continue the charging of the battery according to the battery heating state, thereby achieving precise control of the battery charging.

According to some embodiments of the present application, the step S102 may be specifically implemented as: sending the first message carrying the battery heating state to the charging device according to a first preset period.

In this embodiment, the electrical device periodically acquires the battery heating state, and sends the first message carrying the battery heating state to the charging device, so that the charging device can periodically acquire the battery heating state, thereby achieving precise control of battery charging.

According to some embodiments of the present application, the aforementioned battery charging control method may further include the step of: receiving a second message sent by the charging device, the second message carrying a state of the charging device.

In this embodiment, the charging device sends a second message to the electrical device in the process when the battery is being heated. After receiving the second message sent by the charging device, the electrical device can acquire the state of the charging device from the second message, so that normal communication is maintained between the electrical device and the charging device, and the electrical device can know the state of the charging device. If the electrical device cannot know the state of the charging device within a period of time, a charging timeout alarm will be issued, and the charging device will stop charging. If the user wants to start the charging again, the user must reconnect the electrical device and the charging device, which is very unfriendly to user operation. Therefore, this embodiment can avoid the inconvenience caused to the user by the interruption of the charging procedure.

According to some embodiments of the present application, the aforementioned battery charging control method further includes the step of: adding a corresponding sending time tag to the first message and then storing the first message added with the corresponding sending time tag.

In this embodiment, the electrical device adds a corresponding sending time tag to the first message sent to the charging device and stores the first message added with the corresponding sending time tag for the user to view, thereby improving the experience of the user.

The embodiment of the present application further provides a battery charging control method used for the charging device 20. The method corresponds to the battery charging control method used for the electrical device 10 in the aforementioned embodiment.

Referring to the flow chart of the battery charging control method shown in FIG. 6, the method specifically includes the following steps:
S301. receiving a first message sent by an electrical device, the first message carrying a battery heating state; and
S302. judging whether to enter a battery charging stage according to the battery heating state;
   wherein the battery heating state is a heating state or a heating completion state. The heating state indicates that the temperature of the battery has not yet met the minimum temperature Tₘᵢₙ required for charging, and the heating completion state indicates that the temperature of the battery meets the minimum temperature Tₘᵢₙ required for charging.

According to some embodiments of the present application, the charging device does not enter the battery charging stage when the battery heating state is the heating state; and the charging device enters the battery charging stage when the battery heating state is the heating completion state. When the battery is being heated, the charging device does not enter the battery charging stage, that is, the charging device does not output power, which can avoid possible damage to the power battery caused by charging in a low-temperature environment.

In this embodiment, referring to FIG. 1, the electrical device 10 and the charging device 20 are connected physically, and various pre-charging preparation stages need to be completed before the charging device 20 outputs power. In the low-temperature pulse heating stage of the power battery, the electrical device 10 acquires a battery heating state and sends a first message carrying the battery heating state to the charging device 20. The charging device 20 judges whether to enter the battery charging stage, i.e., whether to output power, according to the battery heating state. The charging device 20 can autonomously implement a process of pulse heating followed by direct current (DC) charging by relying on the interaction with the electrical device 10, thereby avoiding possible damage to the power battery caused by charging in a low-temperature environment and improving the experience of the user.

According to some embodiments of the present application, the aforementioned battery charging control method further includes the step of:
S401. sending a second message to the electrical device when the battery heating state is the heating state, the second message carrying a state of the charging device.

In this embodiment, when the battery is in the heating state, the charging device cannot charge the battery. In order to maintain the normal communication with the electrical device, the charging device sends the second message to the electrical device, so that the electrical device can know the current state of the charging device, thereby avoiding inconvenience to the user caused by interruption of the charging procedure.

According to some embodiments of the present application, the step S401 may be specifically implemented as: sending the second message to the electrical device according to a second preset period when the battery heating state is the heating state.

In this embodiment, the second message is sent periodically, so that the electrical device can regularly know the current state of the charging device, thereby avoiding inconvenience to the user caused by interruption of the charging procedure.

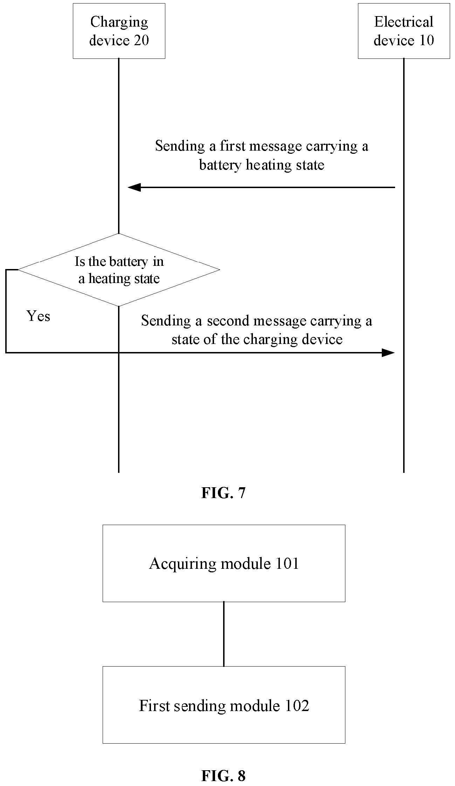

For ease of understanding, FIG. 7 shows a schematic diagram showing a flow chart of interaction between the electrical device 10 and the charging device 20.

The present application further provides a battery charging control apparatus used for an electrical device. As shown in FIG. 8, the battery charging control apparatus includes:
an acquiring module 101 for acquiring a battery heating state; and
a first sending module 102 for sending a first message carrying the battery heating state to a charging device, so that the charging device judges whether to enter a battery charging stage according to the battery heating state;
wherein the battery heating state is a heating state or a heating completion state.

According to some embodiments of the present application, before acquiring the battery heating state, the acquiring module 101 is further used for:
acquiring a current temperature of the battery;
determining that the battery is in the heating state when the current temperature of the battery is less than a preset temperature; and
determining that the battery is in the heating completion state when the current temperature of the battery is greater than or equal to the preset temperature.

According to some embodiments of the present application, the acquiring module 101 is further used for:
continuing to acquire the current temperature of the battery by the electrical device after entering the battery charging stage; and
sending a charging stop instruction to the charging device when the current temperature of the battery is less than the preset temperature.

According to some embodiments of the present application, the acquiring module 101 is further used for:
continuing to acquire the current temperature of the battery by the electrical device after entering the battery charging stage and a preset time has passed.

According to some embodiments of the present application, the first sending module 102 is specifically used for:
sending the first message carrying the battery heating state to the charging device according to a first preset period.

According to some embodiments of the present application, the aforementioned apparatus further includes:
a receiving module for receiving a second message sent by the charging device, the second message carrying a state of the charging device.

According to some embodiments of the present application, the aforementioned apparatus further includes:
a storage module for adding a corresponding sending time tag to the first message and then storing the first message added with the corresponding sending time tag.

The battery charging control apparatus provided in the aforementioned embodiment of the present application and the battery charging control method used for the electrical device provided in the embodiment of the present application are based on the same inventive concept and have the same beneficial effect.

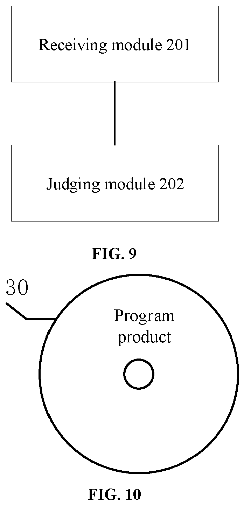

The present application further provides a battery charging control apparatus used for a charging device. As shown in FIG. 9, the battery charging control apparatus includes:
a receiving module 201 for receiving a first message sent by an electrical device, the first message carrying a battery heating state; and
a judging module 202 for judging whether to enter a battery charging stage according to the battery heating state;
wherein the battery heating state is a heating state or a heating completion state.

According to some embodiments of the present application, the judging module 202 is specifically used for:
not allowing the charging device to enter the battery charging stage when the battery heating state is the heating state; and
allowing the charging device to enter the battery charging stage when the battery heating state is the heating completion state.

According to some embodiments of the present application, the aforementioned apparatus further includes:
a second sending module for sending a second message to the electrical device when the battery heating state is the heating state, the second message carrying a state of the charging device.

According to some embodiments of the present application, the second sending module is specifically used for:
sending the second message to the electrical device according to a second preset period when the battery heating state is the heating state.

The battery charging control apparatus provided in the aforementioned embodiment of the present application and the battery charging control method used for the charging device provided in the embodiment of the present application are based on the same inventive concept and have the same beneficial effect.

The present application further provides an electrical device, including: a memory, a processor, and a computer program stored on the memory and runnable on the processor, wherein when run by the processor, the computer program is executed to implement the battery charging control method used for the electrical device in the aforementioned embodiment. The electrical device may be an electric vehicle, an electric toy, a ship, a spacecraft, etc. having components such as a power battery, a motor, and a motor inverter.

The electrical device provided in the aforementioned embodiment of the present application and the battery charging control method used for the electrical device provided in the embodiment of the present application are based on the same inventive concept and have the same beneficial effect.

The present application further provides a charging device, including: a memory, a processor, and a computer program stored on the memory and runnable on the processor, wherein when run by the processor, the computer program is executed to implement the battery charging control method used for the charging device in the aforementioned embodiment.

The charging device provided in the aforementioned embodiment of the present application and the battery charging control method used for the charging device provided in the embodiment of the present application are based on the same inventive concept and have the same beneficial effect.

In the aforementioned electrical device and charging device, the processor may be an integrated circuit chip with signal processing capability. In the implementation process, each step of the aforementioned method can be completed by an integrated logic circuit of hardware in the processor or an instruction in the form of software. The aforementioned processor can be a general-purpose processor, including a central processing unit (CPU), a network processor (NP), etc.; or it may also be a digital signal processor (DSP), an application-specific integrated circuit (ASIC), a field-programmable gate array (FPGA) or other programmable logic devices, discrete gates or transistor logic devices, and discrete hardware components. The various methods, steps and logic block diagrams disclosed in the embodiments of the present application can be implemented or executed. A general-purpose processor may be a microprocessor, or the processor may be any conventional processor, etc. The steps of the method disclosed in the embodiments of the present application can be directly embodied as being executed by a hardware decoding processor, or executed by a combination of hardware and software modules in the decoding processor. The software module may be located in a random access memory, a flash memory, a read-only memory, a programmable read-only memory, or an electrically erasable programmable memory, a register, or the like mature storage media in the art. The storage medium is located in the memory, and the processor reads the information in the memory and completes the steps of the aforementioned method in combination with the hardware of the processor.

The memory may include high-speed random access memory (RAM), and may also include nonvolatile memory, for example at least one disk storage. The communication connection between the apparatus network element and at least one other network element is achieved through at least one communication interface (which can be wired or wireless), and an Internet, a wide area network, a local area network, a metropolitan area network, etc. can be used.

The memory is used for storing programs, and the processor executes the program after receiving an execution instruction. The battery charging control method disclosed in any implementation of the aforementioned embodiment of the present application can be applied to the processor or implemented by the processor.

An embodiment of the present application further provides a computer-readable storage medium corresponding to the battery charging control method provided in the aforementioned implementation. Please refer to FIG. 10, which shows that the computer-readable storage medium is an optical disk 30, on which a computer program (i.e., a program product) is stored. When run by the processor, the computer program will execute the battery charging control method provided in any of the aforementioned implementations.

It should be noted that examples of the computer-readable storage medium may also include, but are not limited to, phase-change random access memory (PRAM), static random access memory (SRAM), dynamic random access memory (DRAM), other types of random access memory (RAM), read-only memory (ROM), electrically erasable programmable read-only memory (EEPROM), flash memory or other optical or magnetic storage media, which are not listed here one by one anymore.

The computer-readable storage medium provided in the aforementioned embodiments of the present application and the battery charging control method provided in the embodiments of the present application are based on the same inventive concept and have the same beneficial effect as the methods adopted, run or implemented by the application programs stored therein.

Finally, it should be noted that: the aforementioned embodiments are only used for illustrating the technical solution of the present application, rather than limiting it. Although the present application has been described in detail with reference to the foregoing embodiments, it should be understood by those of ordinary skills in the art that: it is still possible to modify the technical solutions recited in the foregoing embodiments, or to conduct equivalent replacements on some or all of the technical features; and these modifications and replacements would not make the nature of the corresponding technical solutions depart from the scope of the technical solutions of embodiments of the present invention, and should all be covered by the claims and description of the present application.

## Claims

1. A battery charging control method used for an electrical device, comprising:
acquiring a battery heating state; and
sending a first message carrying the battery heating state to a charging device, so that the charging device judges whether to enter a battery charging stage according to the battery heating state;
wherein the battery heating state is a heating state or a heating completion state.

2. The method according to claim 1, wherein before the acquiring a battery heating state, the method further comprises:
acquiring a current temperature of the battery;
determining that the battery is in the heating state when the current temperature of the battery is less than a preset temperature; and
determining that the battery is in the heating completion state when the current temperature of the battery is greater than or equal to the preset temperature.

3. The method according to claim 1, further comprising:
continuing to acquire the current temperature of the battery by the electrical device after entering the battery charging stage; and
sending a charging stop instruction to the charging device when the current temperature of the battery is less than a preset temperature.

4. The method according to claim 3, wherein the continuing to acquire the current temperature of the battery by the electrical device after entering the battery charging stage comprises:
continuing to acquire the current temperature of the battery by the electrical device after entering the battery charging stage and a preset time has passed.

5. The method according to claim 1, wherein the sending a first message carrying the battery heating state to a charging device comprises:
sending the first message carrying the battery heating state to the charging device according to a first preset period.

6. The method according to claim 1, further comprising:
receiving a second message sent by the charging device, the second message carrying a state of the charging device.

7. The method according to any one of claims 1 to 6, further comprising:
adding a corresponding sending time tag to the first message and then storing the first message added with the corresponding sending time tag.

8. A battery charging control method used for a charging device, comprising:
receiving a first message sent by an electrical device, the first message carrying a battery heating state; and
judging whether to enter a battery charging stage according to the battery heating state;
wherein the battery heating state is a heating state or a heating completion state.

9. The method according to claim 8, wherein the judging whether to enter a battery charging stage according to the battery heating state comprises:
not allowing the charging device to enter the battery charging stage when the battery heating state is the heating state; and
allowing the charging device to enter the battery charging stage when the battery heating state is the heating completion state.

10. The method according to claim 9, further comprising:
sending a second message to the electrical device when the battery heating state is the heating state, the second message carrying a state of the charging device.

11. The method according to claim 10, wherein the sending a second message to the electrical device when the battery heating state is the heating state comprises:
sending the second message to the electrical device according to a second preset period when the battery heating state is the heating state.

12. A battery charging control apparatus used for an electrical device, comprising:
an acquiring module for acquiring a battery heating state; and
a first sending module for sending a first message carrying the battery heating state to a charging device, so that the charging device judges whether to enter a battery charging stage according to the battery heating state;
wherein the battery heating state is a heating state or a heating completion state.

13. A battery charging control apparatus used for a charging device, comprising:
a receiving module for receiving a first message sent by an electrical device, the first message carrying a battery heating state; and
a judging module for judging whether to enter a battery charging stage according to the battery heating state;
wherein the battery heating state is a heating state or a heating completion state.

14. An electrical device, comprising: a memory, a processor, and a computer program stored on the memory and runnable on the processor, wherein when run by the processor, the computer program is executed to implement the method according to any one of claims 1 to 7.

15. A charging device, comprising: a memory, a processor, and a computer program stored on the memory and runnable on the processor, wherein when run by the processor, the computer program is executed to implement the method according to any one of claims 8 to 11.

16. A computer-readable storage medium on which computer-readable instructions are stored, wherein the computer-readable instructions are executable by a processor to implement the method according to any one of claims 1 to 11.
